# EUROPEAN PATENT APPLICATION

(11) **EP 4 650 835 A1**
(43) Date of publication of application: **19.11.2025**
(21) Application number: 23916305.8
(22) Date of filing: 27.12.2023
(51) Int. Cl.: G02B 6/02, G02B 6/036, G02B 6/44

(54) **OPTICAL FIBER**

(30) Priority: 11.01.2023 JP 2023002157
(71) Applicant: SUMITOMO ELECTRIC INDUSTRIES, LTD., Osaka-shi, Osaka 541-0041 (JP)
(72) Inventor: KAWAGUCHI, Yuki, Osaka-shi, Osaka 541-0041 (JP); SAKUMA, Hirotaka, Osaka-shi, Osaka 541-0041 (JP); SATO, Shin, Osaka-shi, Osaka 541-0041 (JP)
(74) Representative: TBK
(86) International application number: PCT/JP2023/047061
(87) International publication number: WO 2024/150692

(57) **Abstract**

This optical fiber (1) comprises: a core (10) including at least one or more kinds of elements selected from an alkali element group composed of alkali metal elements and alkaline earth metal elements; and a clad (20) which surrounds the core (10). The optical fiber (1) has the cut-off wavelength of 1260 nm to 1460 nm. The effective area of the optical fiber at the wavelength of 1450 nm is 75 µm² to 85 µm². The effective area of the optical fiber at the wavelength of 1550 nm is 83 µm² to 95 µm². The effective area of the optical fiber at the wavelength of 1625 nm is equal to or smaller than 100 µm². The transmission loss of the optical fiber at the wavelength of 1550 nm is equal to or smaller than 0.160 dB/km. The wavelength dispersion of the optical fiber at the wavelength of 1550 nm is equal to or larger than 15.0 ps/nm/km.

## Description

### Technical Field

The present disclosure relates to an optical fiber. This application claims priority based on Japanese Patent Application No. 2023-002157 filed on Jan. 11, 2023, and the entire contents of the Japanese patent application are incorporated herein by reference.

### Background Art

An optical communication system using an optical fiber cable having a plurality of optical fibers as a transmission path is known (for example, Patent Literature 1). The amount of information transmitted in optical communication systems is increasing, and there is a need for a technique for increasing the transmission capacity of optical fiber cables.

As one of methods for increasing the transmission capacity, it is known to increase the number of optical fibers accommodated in an optical fiber cable (multi-core). As another method, it is known to expand a wavelength band used for transmission (broadband transmission).

### Citation List

### Patent Literature

Patent Literature 1: Japanese Unexamined Patent Application Publication No. 2011-197667

### Summary of Invention

An optical fiber according to one aspect of the present disclosure includes a core containing at least one element selected from an alkali element group consisting of an alkali metal element and an alkaline-earth metal element, and a cladding surrounding the core. The optical fiber has a cutoff wavelength of 1260 nm to 1460 nm, an effective area of 75 µm² to 85 µm² at a wavelength of 1450 nm, an effective area of 83 µm² to 95 µm² at a wavelength of 1550 nm, an effective area of 100 µm² or less at a wavelength of 1625 nm, a transmission loss of 0.160 dB/km or less at a wavelength of 1550 nm, and a chromatic dispersion of 15.0 ps/nm/km or more at a wavelength of 1550 nm.

### Brief Description of The Drawings

FIG. 1 is a cross-sectional view showing an optical fiber according to an embodiment.
FIG. 2 is a diagram showing an appearance of an optical fiber according to an embodiment.
FIG. 3 is a graph schematically showing a refractive index distribution of an optical fiber according to an embodiment.
FIG. 4 is a table showing optical characteristics of optical fibers according to an example and a comparative example.
FIG. 5 is a graph schematically showing a refractive index distribution of an optical fiber according to a modification.

### Detailed Description

### [Problems to be Solved by Present Disclosure]

When an optical fiber is multi-core in order to increase the transmission capacity, a lateral pressure applied to each optical fiber increases, and local bending is likely to occur in the optical fiber. Such local bending increases the microbend loss (transmission loss) of the optical fiber. In addition, in a case where a wavelength band of a shorter wavelength is used for transmission to achieve broadband transmission, it is necessary to shorten a cutoff wavelength of an optical fiber. When the cutoff wavelength of the optical fiber is shortened, the intensity of light confinement in the core is reduced, and the transmission loss due to bending is increased.

The present disclosure provides an optical fiber capable of achieving multi-core and broadband transmission while reducing an increase in transmission loss, and increasing transmission capacity.

### [Advantageous Effects of Present Disclosure]

According to the present disclosure, it is possible to provide an optical fiber capable of achieving multi-core and broadband transmission while reducing an increase in transmission loss and increasing transmission capacity.

### [Description of Embodiments of Present Disclosure]

First, embodiments of the present disclosure will be listed and described.
(1) An optical fiber according to one aspect of the present disclosure includes a core containing at least one element selected from an alkali element group consisting of an alkali metal element and an alkaline-earth metal element, and a cladding surrounding the core. The optical fiber has a cutoff wavelength of 1260 nm to 1460 nm, an effective area of 75 µm² to 85 µm² at a wavelength of 1450 nm, an effective area of 83 µm² to 95 µm² at a wavelength of 1550 nm, an effective area of 100 µm² or less at a wavelength of 1625 nm, a transmission loss of 0.160 dB/km or less at a wavelength of 1550 nm, and a chromatic dispersion of 15.0 ps/nm/km or more at a wavelength of 1550 nm.
   In this optical fiber, the effective area is not too large and is not too small. Thus, a bending resistance characteristic can be improved while maintaining a transmission capacity of the optical fiber. Thus, even when the optical fiber is multi-core, the occurrence of microbend loss can be reduced. The optical fiber has a cutoff wavelength of 1260 nm to 1460 nm. Thus, since an S-band to be used for transmission can be used, a broadband transmission can be achieved. On the other hand, when the cutoff wavelength is set to be short in order to achieve the broadband transmission, there is a concern that transmission loss due to bending may increase. As described above, the optical fiber can improve the bending resistance, and thus can reduce an increase in transmission loss due to bending. Thus, the optical fiber can achieve multi-core and broadband transmission while reducing an increase in transmission loss, and increase transmission capacity.
(2) In (1), the cladding may include an inner cladding surrounding the core and an outer cladding surrounding the inner cladding, and a relative refractive index difference of the core with respect to the inner cladding may be 0.32 or more. In this case, since the relative refractive index difference of the core with respect to the inner cladding is large, light is easily confined in the core, and transmission loss can be reduced.
(3) In (2), the cladding may further include a trench located between the inner cladding and the outer cladding and surrounding the inner cladding, and an average refractive index of the trench may be smaller than an average refractive index of the inner cladding and an average refractive index of the outer cladding.
(4) In any one of (1) to (3), the optical fiber may further include a covering layer covering an outer periphery of the cladding. The covering layer may include a first layer and a second layer surrounding the first layer, and the first layer may have a Young's modulus of 0.15 MPa to 0.60 MPa. When the Young's modulus of the first layer is 0.60 MPa or less, the cladding is covered with the relatively flexible first layer. Thus, a lateral pressure characteristic of the optical fiber can be improved, and the occurrence of microbend loss can be reduced. In addition, when the Young's modulus of the first layer is 0.15 MPa or more, the production efficiency of the covering layer can be improved.
(5) In (4), the second layer may have a Young's modulus of 700 MPa to 1600 MPa.
(6) In (4) or (5), the optical fiber may further include a plurality of ring marks formed in the covering layer. Each of the plurality of ring marks may be formed at an interval of 50 mm to 1000 mm between adjacent ring marks in an axial direction of the optical fiber. In this case, for example, the type of the optical fiber can be identified by the ring mark. In addition, since the interval of the plurality of ring marks is 50 mm or more, it is possible to reduce an increase in the lateral pressure on the optical fiber, and it is possible to reduce the occurrence of microbend loss. Further, since the interval of the plurality of ring marks is 1000 mm or less, the identifiability of the ring mark can be improved.
(7) In (6), each of the plurality of ring marks may be continuously formed along a circumference of the optical fiber.
(8) In any one of (4) to (7), the covering layer may have an outer diameter of 210 µm or less. In this case, the optical fiber can be easily multi-core.
(9) In any one of (1) to (8), the core may be formed of silica-based glass.

### [Details of Embodiments of Present Disclosure]

Specific examples of an optical fiber of the present disclosure will be described below with reference to the drawings. The present disclosure is not limited to these examples, but is defined by the scope of the claims, and is intended to include all modifications within the meaning and scope equivalent to the scope of the claims. In the description of the drawings, the same elements are denoted by the same reference numerals, and redundant description will be omitted.

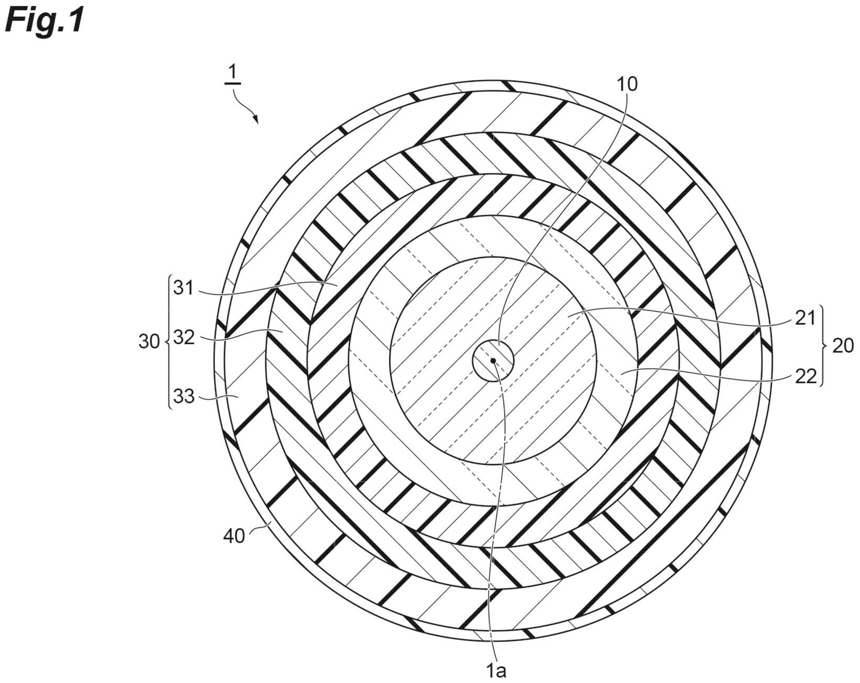

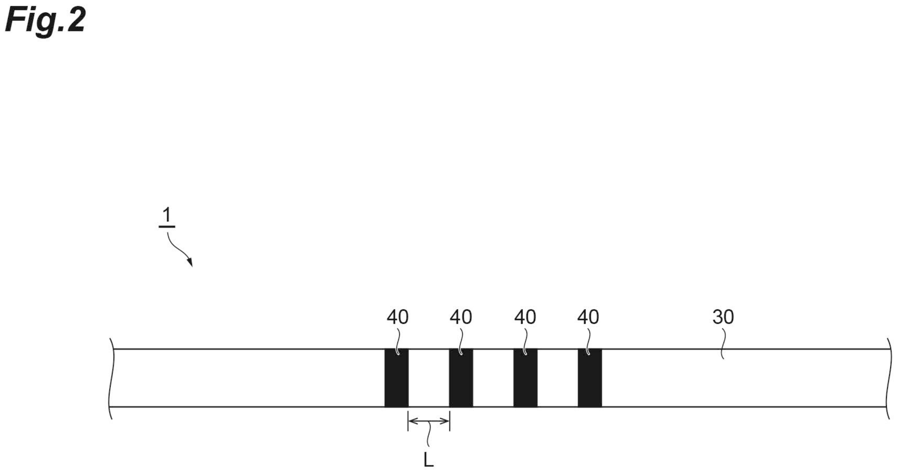

FIG. 1 is a cross-sectional view showing an optical fiber according to an embodiment. FIG. 2 is a diagram showing an appearance of the optical fiber according to the embodiment. An optical fiber 1 according to the embodiment includes a core 10 extending along a central axis 1a, a cladding 20 surrounding the core 10, a covering layer 30 covering an outer periphery of the cladding 20, and a plurality of ring marks 40 formed in the covering layer 30. As an example, a plurality of optical fibers 1 are accommodated in one optical fiber cable. The optical fiber 1 may be an optical fiber used for long-distance large-capacity transmission, for example.

The core 10 is formed of, for example, silica-based glass containing silica glass as a main component. The silica-based glass contains silica in an amount of 60% or more. The core 10 contains at least one element selected from an alkali element group consisting of an alkali metal element and an alkaline-earth metal element. The alkali metal element is, for example, lithium (Li), sodium (Na), potassium (K), rubidium (Rb), or the like. The alkaline-earth metal element is, for example, magnesium (Mg), calcium (Ca), strontium (Sr), barium (Ba), or the like. The core 10 does not contain germanium (Ge). The expression "the core 10 does not contain germanium" means that the core 10 does not substantially contain germanium, and in particular, means that the mass percentage of germanium in the core 10 is 500 ppm or less.

The cladding 20 includes an inner cladding 21 surrounding the core 10 and an outer cladding 22 surrounding the inner cladding 21. The inner cladding 21 and the outer cladding 22 are formed of silica-based glass containing silica glass as a main component. The silica-based glass contains silica in an amount of 60% or more. Fluorine (F) may be added to the inner cladding 21 and the outer cladding 22.

The covering layer 30 includes a primary resin layer 31 (first layer), a secondary resin layer 32 (second layer), and a colored layer 33. The primary resin layer 31 is in close contact with the outer peripheral surface of the outer cladding 22 and surrounds the outer cladding 22. The secondary resin layer 32 is in close contact with the outer peripheral surface of the primary resin layer 31 and surrounds the primary resin layer 31. The primary resin layer 31 and the secondary resin layer 32 may be formed of, for example, a resin that is cured by irradiation with ultraviolet light (ultraviolet-curable resin).

The Young's modulus of the primary resin layer 31 is smaller than the Young's modulus of the secondary resin layer 32. The Young's modulus of the primary resin layer 31 is, for example, 0.15 MPa to 0.60 MPa. The Young's modulus of the secondary resin layer 32 is, for example, 700 MPa to 1600 MPa.

The Young's modulus of the primary resin layer 31 is measured by, for example, a pullout modulus (POM) at 23°C. Specifically, first, a first metal cylinder and a second metal cylinder are bonded to two positions of the optical fiber 1, respectively, with a predetermined interval therebetween. The covering layer 30 between the first metal cylinder and the second metal cylinder is removed to expose the cladding 20. The optical fiber 1 on the outside of the first metal cylinder, that is, on the side where the second metal cylinder is not mounted, is cut. Subsequently, the first metal cylinder is fixed, and the second metal cylinder is gently moved in a direction away from the fixed first metal cylinder. When a length of the second metal cylinder is Lc [mm], a movement amount of a chuck is Z [mm], an outer diameter of the primary resin layer 31 is Dp [µm], an outer diameter of the cladding 20 is Df [µm], a Poisson's ratio of the primary resin layer 31 is v, and a load during movement of a chuck device is W [N], a Young's modulus [MPa] of the primary resin layer 31 is measured from the following formula. Young's modulus [MPa] = ((1 + v) W/πLcZ) × ln (Dp/Dt) At this time, it is considered that the cladding 20, the secondary resin layer 32, and the adhesive portion are not deformed, and the primary resin layer 31 is deformed to move the second metal cylinder.

The Young's modulus of the secondary resin layer 32 is determined from a 2.5% secant value by performing a tensile test (gauge length: 25 mm) under conditions of 23±2°C and 50±10% RH using the pipe-shaped covering layer 30 (length: 50 mm or more) obtained by pulling out the core 10 and the cladding 20 from the optical fiber 1, for example.

The colored layer 33 is in close contact with the outer peripheral surface of the secondary resin layer 32 and surrounds the secondary resin layer 32. The colored layer 33 may be formed of, for example, an ultraviolet-curable resin containing a pigment. In the embodiment, the outer diameter (diameter) of the colored layer 33 is 210 µm or less. In the embodiment, the outer diameter of the colored layer 33 is equal to the outer diameter of the covering layer 30. That is, the outer diameter of the covering layer 30 is 210 µm or less.

The plurality of ring marks 40 are formed on the outer peripheral surface of the colored layer 33. The ring mark 40 functions as an identification mark indicating the type of the optical fiber 1. The ring mark 40 may be formed by using, for example, an ink jet method of ejecting ink. As shown in FIG. 2, each of the plurality of ring marks 40 is formed at an interval L between adjacent ring marks in an axial direction of the optical fiber. In the embodiment, the interval L is 50 mm to 1000 mm. Each ring mark 40 is formed continuously in a circumferential direction of the optical fiber 1. That is, in a cross-sectional view of the optical fiber 1 perpendicular to the central axis 1a, each ring mark 40 is formed in an annular shape.

The optical fiber 1 has a cutoff wavelength of 1260 nm to 1460 nm. In this case, optical communication in a single mode is possible in an S-band (1460 nm to 1530 nm), a C-band (1530 nm to 1565 nm), and an L-band (1565 nm to 1625 nm). A general-purpose optical fiber has a cutoff wavelength smaller than 1260 nm. Thus, the optical fiber 1 has a larger cutoff wavelength than the general-purpose optical fiber.

The effective area of the optical fiber 1 at a wavelength of 1450 nm is 75 µm² to 85 µm². The effective area of the optical fiber 1 at a wavelength of 1550 nm is 83 µm² to 95 µm². The effective area of the optical fiber 1 at a wavelength of 1625 nm is 100 µm² or less.

The mode field diameter (MFD) of the optical fiber 1 at a wavelength of 1450 nm is 9.9 µm to 10.0 µm. The MFD of the optical fiber 1 at a wavelength of 1550 nm is 10.3 µm to 10.6 µm. The MFD of the optical fiber 1 at a wavelength of 1625 nm is 10.6 µm to 11.1 µm.

The transmission loss of the optical fiber 1 at a wavelength of 1450 nm is 0.195 dB/km to 0.202 dB/km. The transmission loss of the optical fiber 1 at a wavelength of 1550 nm is 0.154 dB/km to 0.160 dB/km. The transmission loss of the optical fiber 1 at a wavelength of 1625 nm is 0.175 dB/km to 0.180 dB/km. The chromatic dispersion of the optical fiber 1 at a wavelength of 1550 nm is 15.0 ps/nm/km to 19.8 ps/nm/km. When the chromatic dispersion of the optical fiber 1 at a wavelength of 1550 nm is 15.0 ps/nm/km or more, the effective area of the optical fiber 1 can be increased, and low nonlinearity can be achieved.

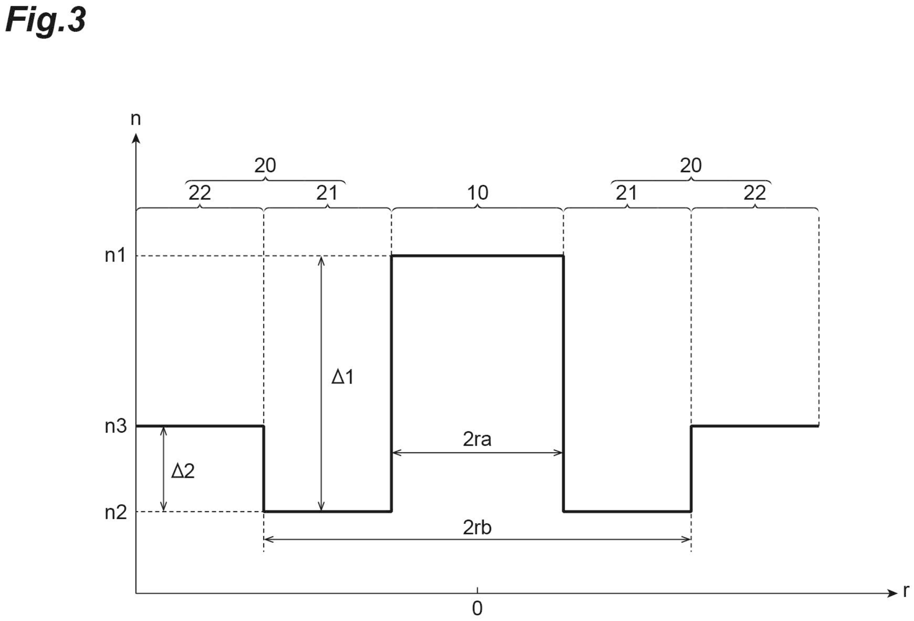

FIG. 3 is a graph schematically showing a refractive index distribution of the optical fiber according to the embodiment. A horizontal axis represents a radial position of the optical fiber 1, and a vertical axis represents the refractive index of the optical fiber 1. In FIG. 3, the refractive indices of core 10 and the cladding 20 (inner cladding 21 and the outer cladding 22) are shown. A radial position r of the central axis 1a of the optical fiber 1 is 0. When the radius of the core 10 is denoted by ra (the diameter is denoted by 2ra) and the radius of the inner cladding 21 is denoted by rb (the diameter is denoted by 2rb), a ratio rb/ra of a radius rb of the inner cladding to a radius ra of the core 10 is 3.5 to 5.

The core 10 has an average refractive index n1, the inner cladding 21 has an average refractive index n2, and the outer cladding 22 has an average refractive index n3. The average refractive index n1 of the core 10 is larger than the average refractive index n2 of the inner cladding 21 and the average refractive index n3 of the outer cladding 22. The average refractive index n3 of the outer cladding 22 is larger than the average refractive index n2 of the inner cladding 21. That is, in this example, the relationship of average refractive index n1 > average refractive index n3 > average refractive index n2 is established.

A relative refractive index difference Δ1 of the core 10 with respect to the inner cladding 21 is defined as (n1² - n2²)/2n1² × 100 [%]. The relative refractive index difference Δ1 of the core 10 with respect to the inner cladding 21 is 0.32% to 0.4%. A relative refractive index difference Δ2 of the outer cladding 22 with respect to the inner cladding 21 is defined by (n3² - n2²)/2n3² × 100 [%]. The relative refractive index difference Δ2 of the outer cladding 22 with respect to the inner cladding 21 is 0.01% to 0.1%.

As described above, in the optical fiber 1, the effective area at a wavelength of 1450 nm is 75 µm² to 85 µm², the effective area at a wavelength of 1550 nm is 83 µm² to 95 µm², and the effective area at a wavelength of 1625 nm is 100 µm² or less. As described above, the effective area of the optical fiber 1 is not too large and is not too small. Thus, the bending resistance characteristic can be improved while maintaining the transmission capacity of the optical fiber 1. Thus, even when the optical fiber is multi-core, the occurrence of microbend loss can be reduced. The optical fiber 1 has a cutoff wavelength of 1260 nm to 1460 nm. Thus, since the S-band to be used for transmission can be used, the broadband transmission can be achieved. On the other hand, when the cutoff wavelength is set to be short in order to achieve the broadband transmission, there is a concern that the transmission loss due to bending may increase, but as described above, the bending resistance characteristic can be improved in the optical fiber 1, and thus, the increase in the transmission loss due to bending can be reduced. Thus, the optical fiber 1 can achieve multi-core and broadband transmission while reducing an increase in transmission loss, and increase transmission capacity.

In general, an optical fiber used for long-distance transmission is required to have low loss and low nonlinearity in order to improve a signal-to-noise ratio (SN ratio). In order to reduce the nonlinearity of the optical fiber, it is effective to increase the effective area of the optical fiber. On the other hand, it is known that an optical fiber having a large effective area has deteriorated microbend characteristics. In addition, in long-distance transmission, Raman amplification may be applied together with amplification by an erbium doped fiber amplifier (EDFA). It is also known that a Raman amplification efficiency decreases as the effective area increases. In contrast, since the optical fiber 1 has an appropriate size in which the effective area is not too large as described above, it is possible to reduce the decrease in the Raman amplification efficiency while maintaining the transmission characteristic of the optical fiber 1.

In addition, although it is effective to use a covering layer with the improved microbend loss characteristic in order to reduce an increase in transmission loss, such a covering layer is generally expensive, which leads to an increase in production cost of the optical fiber. In contrast, according to the optical fiber 1, the occurrence of microbend loss can be reduced without increasing the production cost of the optical fiber.

The above-described broadband transmission will be described in more detail. As an example, in a case where the C-band is used for transmission, in order to guarantee a single mode operation, a cutoff wavelength needs to be set to a cutoff wavelength of 1530 nm or less (the shortest wavelength of the C-band) described in the ITU-T G. 650. 1 standard. Then, when the S-band and the L-band are used in addition to the C-band in order to increase the transmission capacity, the cutoff wavelength needs to be 1460 nm or less, which is the shortest wavelength of the S-band. That is, it is necessary to set the cutoff wavelength to be short. However, when the cutoff wavelength is set to be short, there is a concern that transmission loss due to bending may increase in the L-band. In contrast, in the optical fiber 1, the increase in transmission loss due to such bending can be reduced as described above.

The cladding 20 includes the inner cladding 21 surrounding the core 10 and the outer cladding 22 surrounding the inner cladding 21. The relative refractive index difference of the core 10 to the inner cladding 21 is 0.32% or more. Since the relative refractive index difference of the core 10 with respect to the inner cladding 21 is large, light is easily confined in the core 10, and transmission loss can be reduced.

In order to reduce transmission loss, a silica core structure not containing germanium in the core may be adopted. In such a structure, fluorine (F) may be added to the cladding in order to provide a difference in refractive index between the core and the cladding. In the portion to which fluorine is added, Rayleigh scattering loss increases. Thus, when the confinement of light in the core is weakened, the influence of cladding is strengthened and the scattering loss is increased. In contrast, in the optical fiber 1, since light is easily confined in the core 10 as described above, such an increase in the Rayleigh scattering loss can be reduced.

The optical fiber 1 includes the covering layer 30 covering the outer periphery of the cladding 20. The covering layer 30 includes the primary resin layer 31 and the secondary resin layer 32 surrounding the primary resin layer 31. The Young's modulus of the primary resin layer 31 is 0.15 MPa to 0.60 MPa. When the Young's modulus of the primary resin layer 31 is 0.60 MPa or less, the cladding 20 is covered with the relatively flexible primary resin layer 31. Thus, the lateral pressure characteristic of the optical fiber 1 can be improved, and the occurrence of microbend loss can be reduced. In addition, since the Young's modulus of the primary resin layer 31 is 0.15 MPa or more, the production efficiency of the covering layer 30 can be improved.

The optical fiber 1 includes the plurality of ring marks 40 formed on the covering layer 30. Each of the plurality of ring marks 40 is formed at an interval of 50 mm to 1000 mm between adjacent ring marks in the axial direction of the optical fiber 1. Thus, for example, the type of the optical fiber 1 can be identified by the ring mark 40. In addition, in the optical fiber 1, since the interval of the plurality of ring marks 40 is 50 mm or more, it is possible to reduce an increase in lateral pressure loss occurring in the optical fiber 1, and to reduce the occurrence of microbend loss. Specifically, since the outer diameter of the optical fiber 1 is increased at the portion where the ring mark 40 is formed, when the optical fiber 1 is accommodated in the optical fiber cable, a larger lateral pressure may be generated at the portion where the ring mark 40 is formed than at other portions. In the optical fiber 1, the plurality of ring marks 40 are formed to be appropriately separated from each other, and the ring marks 40 are not formed more than necessary. Thus, an increase in lateral pressure loss occurring in the optical fiber 1 can be reduced. Further, in the optical fiber 1, the interval of the plurality of ring marks 40 is 1000 mm or less. Thus, the identifiability of the ring mark 40 can be improved.

The outer diameter of the covering layer 30 is 210 µm or less. Thus, the optical fiber 1 can be easily multi-core.

### EXAMPLES

The present disclosure will now be described in more detail by way of an example and a comparative example showing the results of evaluation tests. It is to be understood that the present disclosure is not limited to these examples.

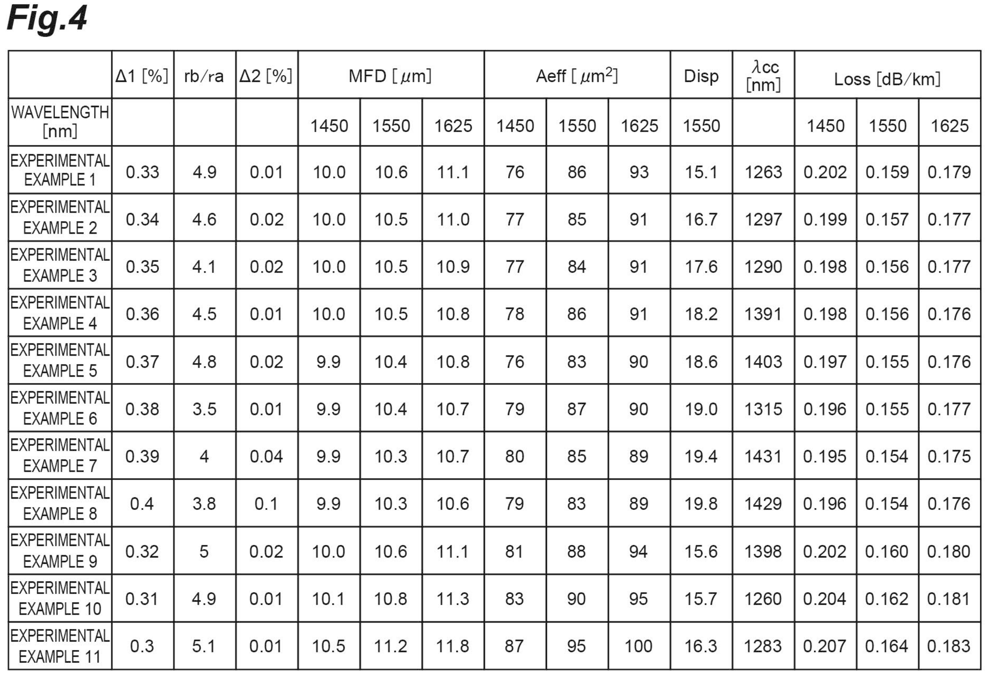

FIG. 4 is a table showing optical characteristics of optical fibers according to an example and a comparative example. Experimental examples 1 to 9 shown in the table of FIG. 4 are examples, and experimental examples 10 and 11 are comparative examples. The table of FIG. 4 shows the relative refractive index difference Δ1 of the core with respect to the inner cladding, the ratio rb/ra of the radius rb of the inner cladding to the radius ra of the core, the relative refractive index difference Δ2 of the outer cladding with respect to the inner cladding, the MFD of the optical fiber, an effective area Aeff, a chromatic dispersion Disp, a cutoff wavelength λcc, and a transmission loss Loss.

The optical fibers of experimental examples 1 to 9 correspond to the optical fiber 1 according to the embodiment. As shown in FIG. 4, in the optical fibers according to experimental examples 1 to 9, the effective area Aeff at a wavelength of 1450 nm is 75 µm² to 85 µm², the effective area Aeff at a wavelength of 1550 nm is 83 µm² to 95 µm², and the effective area Aeff at a wavelength of 1625 nm is 100 µm² or less. As described above, in the optical fibers according to experimental examples 1 to 9, since the effective area is an appropriate size, it is possible to improve the bending resistance characteristic while maintaining the transmission capacity of the optical fiber. In the optical fibers according to experimental examples 1 to 9, the transmission loss at a wavelength of 1550 nm is reduced to 0.160 dB/km or less. Thus, the optical fibers of experimental examples 1 to 9 can achieve multi-core and broadband transmission while reducing an increase in transmission loss, and can increase transmission capacity.

In contrast, in the optical fiber according to experimental example 10, the transmission loss at a wavelength of 1550 nm is 0.162 dB/km, which exceeds 0.160 dB/km. Thus, the optical fiber according to experimental example 10 cannot achieve multi-core and broadband transmission while reducing an increase in transmission loss.

In the optical fiber according to experimental example 11, the effective area Aeff at a wavelength of 1450 nm is 87 µm², which is larger than 85 µm². Thus, the bending resistance cannot be improved. In addition, in the optical fiber according to experimental example 11, the transmission loss at a wavelength of 1550 nm is 0.164 dB/km, which exceeds 0.160 dB/km. Thus, the optical fiber according to experimental example 11 cannot achieve multi-core and broadband transmission while reducing an increase in transmission loss.

### (Modification)

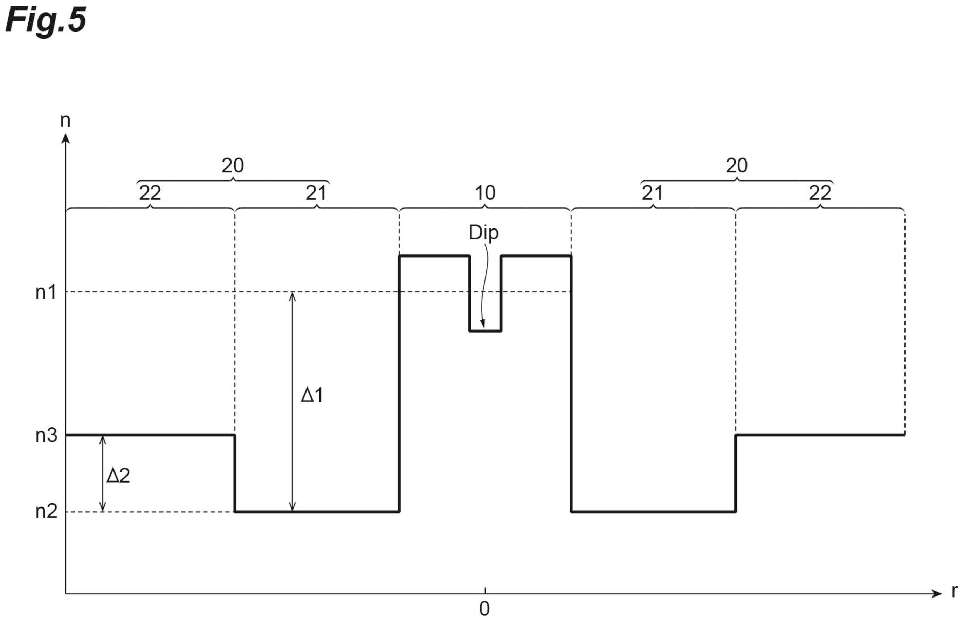

Referring to FIG. 5, a modification of the optical fiber 1 will be described. FIG. 5 is a graph schematically showing a refractive index distribution of an optical fiber according to the modification. In this modification, a dip of the refractive index occurs in the central portion of the core 10. The average refractive index n1 of the core 10 in the present modification is a refractive index averaged in the radial direction of the optical fiber 1 including a dip portion.

According to the optical fiber 1 of the present modification, the dip of the refractive index occurs in the central portion of the core 10, and thus the MFD can be reduced while maintaining the size of the effective area of the optical fiber 1. Thus, it is possible to reduce the connection loss with a general-purpose optical fiber having a relatively small MFD.

Although the embodiment have been described above, the present disclosure is not necessarily limited to the above-described embodiment and modification, and various changes can be made without departing from the gist of the present disclosure. The above embodiment and modification may be combined as appropriate.

For example, the Young's modulus of the primary resin layer 31 may be equal to or larger than the Young's modulus of the secondary resin layer 32. The Young's modulus of the primary resin layer 31 may be, for example, smaller than 0.15 MPa or larger than 0.60 MPa. The Young's modulus of the secondary resin layer 32 may be, for example, smaller than 700 MPa or larger than 1600 MPa.

The number of layers included in the covering layer 30 is not limited. For example, the covering layer 30 may have only one or two layers, or may have four or more layers. The covering layer 30 may not include the colored layer 33. The outer diameter of the covering layer 30 may be larger than 210 µm.

The interval L of the plurality of ring marks 40 may be smaller than 50 mm or may be larger than 1000 mm. Each ring mark 40 may be formed discontinuously in the circumferential direction of the optical fiber 1. The plurality of ring marks 40 may be formed inside the covering layer 30 (for example, inside the colored layer 33). For example, the ring mark 40 may be formed between the secondary resin layer 32 and the colored layer 33 or between the primary resin layer 31 and the secondary resin layer 32. In this case, the layer located outside the ring mark 40 may be formed of a material that allows the ring mark 40 to be visually recognized from the outside (a material having transparency to visible light). The phrase "having transparency to visible light" means that the transmissivity of light having a wavelength of 400 nm to 750 nm is 20% or more.

The MFD of the optical fiber 1 at a wavelength of 1450 nm may be smaller than 9.9 µm or larger than 10.0 µm. The MFD of the optical fiber 1 at a wavelength of 1550 nm may be smaller than 10.3 µm or larger than 10.6 µm. The MFD of the optical fiber 1 at a wavelength of 1625 nm may be smaller than 10.6 µm or larger than 11.1 µm.

The transmission loss of the optical fiber 1 at a wavelength of 1450 nm may be smaller than 0.195 dB/km or may be larger than 0.202 dB/km. The transmission loss of the optical fiber 1 at a wavelength of 1550 nm may be less than 0.154 dB/km. The transmission loss of the optical fiber 1 at a wavelength of 1625 nm may be smaller than 0.175 dB/km or may be larger than 0.180 dB/km. The chromatic dispersion of the optical fiber 1 at a wavelength of 1550 nm may be larger than 19.8 ps/nm/km.

The ratio rb/ra of the radius rb of the inner cladding 21 to the radius ra of the core 10 may be less than 3.5 or larger than 5. The relative refractive index difference Δ1 of the core 10 with respect to the inner cladding 21 may be larger than 0.4%. The relative refractive index difference Δ2 of the outer cladding 22 with respect to the inner cladding 21 may be less than 0.01% or larger than 0.1%.

The cladding 20 may further include a trench surrounding the inner cladding 21. The trench may be disposed between the inner cladding 21 and the outer cladding 22 and may be in contact with the outer peripheral surface of the inner cladding 21. The trench may be formed of silica-based glass containing silica glass as a main component. The silica-based glass contains silica in an amount of 60% or more. The average refractive index of the trench is smaller than the average refractive index n2 of the inner cladding 21 and the average refractive index n3 of the outer cladding 22.

The characteristics of the optical fiber can be measured by the following methods. The element contained in the core can be detected by, for example, an electron probe micro analyzer (EMPA). The cutoff wavelength, the effective area, the transmission loss, and the chromatic dispersion can be measured by the method described in ITU-T. G. 650. 1. The refractive index can be measured by, for example, a method described in A. D. Yablon, "Multi-Wavelength Optical Fiber Refractive Index Profiling by Spatially Resolved Fourier Transform Spectroscopy" J. Lightwave Technol., vol. 28, pp. 360 to 364 (2010). The outer diameter of the covering layer can be measured by, for example, the method described in IEC60793-1-21.

### Reference Signs List

1 optical fiber
1a central axis
10 core
20 cladding
21 inner cladding
22 outer cladding
30 covering layer
31 primary resin layer (first layer)
32 secondary resin layer (second layer)
33 colored layer
40 ring mark

## Claims

1. An optical fiber comprising:
a core containing at least one element selected from an alkali element group consisting of an alkali metal element and an alkaline-earth metal element; and
a cladding surrounding the core,
wherein the optical fiber has a cutoff wavelength of 1260 nm to 1460 nm,
an effective area of 75 µm² to 85 µm² at a wavelength of 1450 nm,
an effective area of 83 µm² to 95 µm² at a wavelength of 1550 nm,
an effective area of 100 µm² or less at a wavelength of 1625 nm,
a transmission loss of 0.160 dB/km or less at a wavelength of 1550 nm, and
a chromatic dispersion of 15.0 ps/nm/km or more at a wavelength of 1550 nm.

2. The optical fiber according to claim 1, wherein
the cladding includes an inner cladding surrounding the core and an outer cladding surrounding the inner cladding, and
a relative refractive index difference of the core with respect to the inner cladding is 0.32% or more.

3. The optical fiber according to claim 2, wherein
the cladding further includes a trench located between the inner cladding and the outer cladding and surrounding the inner cladding, and
an average refractive index of the trench is smaller than an average refractive index of the inner cladding and an average refractive index of the outer cladding.

4. The optical fiber according to any one of claims 1 to 3, further comprising:
a covering layer covering an outer periphery of the cladding,
wherein the covering layer includes a first layer and a second layer surrounding the first layer, and
the first layer has a Young's modulus of 0.15 MPa to 0. 60 MPa.

5. The optical fiber according to claim 4, wherein
the second layer has a Young's modulus of 700 MPa to 1600 MPa.

6. The optical fiber according to claim 4 or 5, further comprising:
a plurality of ring marks formed in the covering layer,
wherein each of the plurality of ring marks is formed at an interval of 50 mm to 1000 mm between adjacent ring marks in an axial direction of the optical fiber.

7. The optical fiber according to claim 6, wherein
each of the plurality of ring marks is continuously formed along a circumference of the optical fiber.

8. The optical fiber according to any one of claims 4 to 7, wherein
the covering layer has an outer diameter of 210 µm or less.

9. The optical fiber according to any one of claims 1 to 8, wherein
the core is formed of silica-based glass.
